# FASCICULE DE BREVET EUROPEEN

(11) **EP 3 596 522 B1**
(45) Date de publication et mention de la délivrance du brevet: **16.08.2023**
(21) Numéro de dépôt: 18712189.2
(22) Date de dépôt: 16.03.2018
(51) Int. Cl.: G02B 7/182, G02B 27/01

(54) **DISPOSITIF DE RÉFLEXION OPTIQUE POUR AFFICHEUR TÊTE-HAUTE DE VÉHICULE AUTOMOBILE, AFFICHEUR TÊTE-HAUTE ET PROCÉDÉ DE RÉGLAGE**
VORRICHTUNG MIT OPTISCHER REFLEXION FÜR EINE HEAD-UP-ANZEIGE EINES KRAFTFAHRZEUGS, HEAD-UP-ANZEIGE UND ANPASSUNGSVERFAHREN
OPTICAL REFLECTION DEVICE FOR A MOTOR-VEHICLE HEAD-UP DISPLAY, HEAD-UP DISPLAY AND ADJUSTING METHOD

(30) Priorité: 17.03.2017 FR 1752234
(43) Date de publication de la demande: 22.01.2020
(73) Titulaire: Valeo Comfort and Driving Assistance, 94000 Créteil (FR)
(72) Inventeur: MERMILLOD, Pierre, 94046 Créteil Cedex (FR); GACHE, Stéphane, 94046 Créteil Cedex (FR)
(74) Mandataire: Delplanque, Arnaud
(86) Numéro de dépôt international: PCT/EP2018/056762
(87) Numéro de publication internationale: WO 2018/167313

(56) Documents cités:
- EP-A1- 2 562 597
- US-A- 3 182 552
- US-A1- 2006 132 879
- US-A1- 2011 235 185

## Description

### DOMAINE TECHNIQUE AUQUEL SE RAPPORTE L'INVENTION

La présente invention concerne de manière générale le domaine des aides à la conduite de véhicules motorisés.

Elle concerne plus particulièrement un dispositif de réflexion optique pour afficheur tête-haute de véhicule automobile ainsi qu'un afficheur tête-haute et un procédé de réglage.

### ARRIÈRE-PLAN TECHNOLOGIQUE

Pour faciliter et rendre plus sûre la conduite d'un véhicule automobile, on souhaite éviter que le conducteur ne soit forcé de détourner son regard de la route qu'il emprunte.

Pour cela, il est connu d'utiliser un afficheur tête-haute, adapté à projeter des images contenant des éléments d'information, par exemple la vitesse du véhicule, la direction à suivre..., à la hauteur du regard et dans le champ de vision du conducteur afin de l'aider dans sa conduite.

Dans ce domaine des aides à la conduite de véhicules par affichage tête-haute, on connaît en particulier des appareils de projection comportant une source lumineuse, un écran imageur et un miroir de repliement. Le miroir de repliement permet de renvoyer l'image à afficher vers un élément transparent partiellement réfléchissant grâce auquel le conducteur peut visualiser les images projetées, cet élément correspondant généralement au parebrise du véhicule ou à un combineur.

Dans certaines applications, en particulier de réalité augmentée où l'on superpose aux éléments réels visibles dans le champ de vision du conducteur des éléments contenus dans les images, il faut que ces éléments projetés viennent en coïncidence/superposition avec les éléments réels.

A titre d'exemple, il peut arriver que l'on souhaite entourer un obstacle réel, par exemple un piéton traversant la route, au moyen d'un cercle virtuel affiché grâce à l'appareil de projection. On comprend qu'il est important de bien centrer le cercle virtuel par rapport à l'obstacle réel.

Il est donc nécessaire que la direction de l'affichage projeté par l'appareil de projection soit correctement orientée.

### OBJET DE L'INVENTION

L'invention propose de mettre en oeuvre un moyen d'ajustement de la direction de réflexion du miroir de repliement au sein de l'appareil de projection des images.

Plus particulièrement, on propose selon l'invention un dispositif de réflexion optique tel que décrit dans la revendication 1.

D'autres caractéristiques non limitatives et avantageuses du système conforme à l'invention, prises individuellement ou selon toutes les combinaisons techniquement possibles, sont les suivantes :
- au moins un élément déformable est pris en sandwich entre le premier côté du miroir de repliement et le châssis, et ledit système de serrage comporte un élément d'appui qui s'appuie sur le second côté du miroir de repliement,
- ledit élément déformable est pris en sandwich entre le châssis et un élément d'appui du système de serrage, et ledit système de serrage comporte un mors dont une partie est fixée au miroir de repliement et dont l'autre est bloquée entre ledit élément déformable et ledit élément d'appui,
- il est prévu trois ou quatre systèmes de serrage qui s'appliquent sur le miroir de repliement en des zones d'application distinctes,
- l'ajustement du miroir de repliement se fait du premier côté du miroir de repliement,
- l'ajustement du miroir de repliement se fait du second côté du miroir de repliement,
- le système de serrage est essentiellement situé du premier côté du miroir de repliement et il comporte une partie ajustable qui s'étend entre le châssis et l'élément d'appui,
- le système de serrage est essentiellement situé du second côté du miroir de repliement et il comporte une partie ajustable qui s'étend entre l'élément d'appui et un retour d'un montant solidaire du châssis, le montant s'étendant à partir du châssis vers le retour située au-delà du plan porté par le second côté du miroir de repliement,
- inversement, le système de serrage et l'élément déformable sont intervertis de part et d'autre du miroir de repliement, le système de serrage est essentiellement disposé du premier côté du miroir de repliement entre le châssis et un élément d'appui s'appuyant sur le premier côté du miroir de repliement et il comporte un moins un élément déformable pris en sandwich entre le second côté du miroir de repliement et un retour d'un montant solidaire du châssis, le montant s'étendant à partir du châssis vers le retour situé au-delà du plan porté par le second côté du miroir de repliement,
- les zones d'application sont réparties de manière à réduire les interactions entre les ajustements dans les zones d'application sur l'orientation de réflexion du miroir de repliement,
- le châssis comporte deux faces opposées, une face interne côté du miroir de repliement et une face externe opposée à la face interne et dans le cas où l'ajustement du système de serrage s'effectue par action sur le système de serrage du côté du premier côté du miroir de repliement, ledit ajustement est de préférence côté face externe du châssis,
- le miroir de repliement comporte un bord périphérique,
- les zones d'application sont situées au voisinage du bord périphérique du miroir de repliement, notamment par appui sur une face du miroir de repliement, avec ou sans traversée dudit miroir de repliement, ou prise par une pince du bord périphérique,
- les zones d'application sont situées dans la tranche du bord périphérique du miroir de repliement, notamment une lame étant insérée dans l'épaisseur du miroir de repliement dans la tranche dudit bord périphérique,
- les zones d'application sont situées en dehors d'une zone utile de réflexion du miroir de repliement, cette dernière étant utilisée pour réfléchir les images projetées de l'afficheur tête-haute,
- selon le mode de réalisation, on utilise un élément déformable par zone d'application ou, alors, un même élément déformable peut être utilisé pour plusieurs zones d'application ou même pour toutes les zones d'application, l'élément déformable pouvant être localisé dans la zone d'application, du même côté ou de l'autre côté du miroir, et éventuellement déborder de la zone d'application ou pouvant être localisé à distance de la zone d'application,
- dans le cas d'un seul et même élément déformable pour l'ensemble des zones d'application, cet élément déformable peut être un joint souple disposé le long du bord périphérique du miroir de repliement et qui assure donc en plus une fonction d'étanchéité,
- il est prévu trois ou quatre systèmes de serrage pour autant de zones d'application,
- chaque système de serrage comporte une vis,
- la vis comporte une tête de vissage de diamètre supérieur à celui de la partie filetée de la vis,
- chaque vis est vissée dans le châssis,
- chaque vis est disposée perpendiculairement au miroir de repliement,
- le miroir de repliement est percé dans les zones d'application pour le passage des vis,
- dans le cas où la vis est disposée traversante à travers le miroir de repliement dans la zone d'application, la traversée du miroir de repliement par la vis comporte un filet permettant le vissage de la vis à travers le miroir de repliement,
- l'élément déformable a une capacité à se déformer élastiquement en s'écrasant de plus de la moitié de son épaisseur initiale,
- l'élément déformable est un bloc de caoutchouc ou de mousse synthétique, ou un ressort,
- le moyen de verrouillage est une colle,
- la colle est une colle fusible ou un frein filet ou un équivalent,
- la colle est une colle réticulable ou polymérisable,
- le miroir de repliement est carré, rectangulaire, polygonal, trapézoïdal, à bord courbe, à bords courbes, à bords mixtes linéaires et courbes ou toute autre forme adapté pour suivre l'implantation des rayons lumineux,
- le miroir de repliement carré ou rectangulaire comporte quatre coins et un bord périphérique à quatre arêtes,
- le miroir de repliement comporte trois zones d'application,
- le miroir de repliement comporte trois zones d'application, deux des trois zones d'application étant à deux coins du miroir et la troisième à la partie médiane d'une arête du miroir qui est située à l'opposé des deux coins,
- le miroir de repliement comporte trois zones d'application, les trois zones d'application étant à trois coins du miroir de repliement,
- le miroir de repliement comporte quatre zones d'application,
- le miroir de repliement comporte quatre zones d'application, les quatre zones d'application étant à quatre coins du miroir de repliement,
- le miroir de repliement comporte quatre zones d'application, les quatre zones d'application étant aux quatre parties médianes de quatre arêtes du miroir de repliement,
- le véhicule est un parmi : une automobile, un camion, un bus ou un autocar.

L'invention concerne également un afficheur tête-haute pour véhicule automobile, comportant, de l'amont vers l'aval d'un chemin lumineux d'affichage d'images : au moins une source lumineuse, un écran imageur, et un élément transparent partiellement réfléchissant prévu pour rendre visible sous forme d'une image virtuelle, à un conducteur du véhicule automobile, des images lumineuses projetées par la source lumineuse et l'écran imageur, l'afficheur comportant, entre l'écran imageur et l'élément transparent partiellement réfléchissant, un dispositif de réflexion conforme à l'invention.

Dans des variantes de réalisation de l'afficheur, les caractéristiques suivantes, possiblement combinées entre elles, sont considérées :
- ladite au moins une source lumineuse, l'écran imageur et le dispositif de réflexion forment un appareil de projection,
- dans l'afficheur tête haute, l'élément transparent partiellement réfléchissant est une plaque semi réfléchissante dédiée à l'afficheur et rapportée dans le véhicule, notamment un combineur, ou, alors, est un parebrise du véhicule,
- dans l'afficheur tête haute, la position et/ou l'orientation de l'appareil de projection par rapport à l'élément transparent partiellement réfléchissant est réglable.

L'invention concerne enfin un procédé de réglage d'un dispositif de réflexion d'un afficheur tête-haute conforme à l'invention, le procédé comportant :
- l'affichage par l'écran imageur d'une image de mire, et
- le réglage de la position de l'image projetée de la mire sur le miroir de repliement ou sur l'élément transparent partiellement réfléchissant en ajustant le serrage de l'un au moins des systèmes de serrage.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un dispositif de réflexion optique ajustable selon l'invention avec deux exemples de systèmes de serrage ajustables,
- la figure 2 schématise un afficheur tête-haute de véhicule automobile comportant un appareil de projection dans lequel est incorporé le dispositif de réflexion optique de l'invention,
- la figure 3 représente une première variante de mise en oeuvre du dispositif de réflexion optique ajustable, et
- la figure 4 représente une seconde variante de mise en oeuvre du dispositif de réflexion optique ajustable.

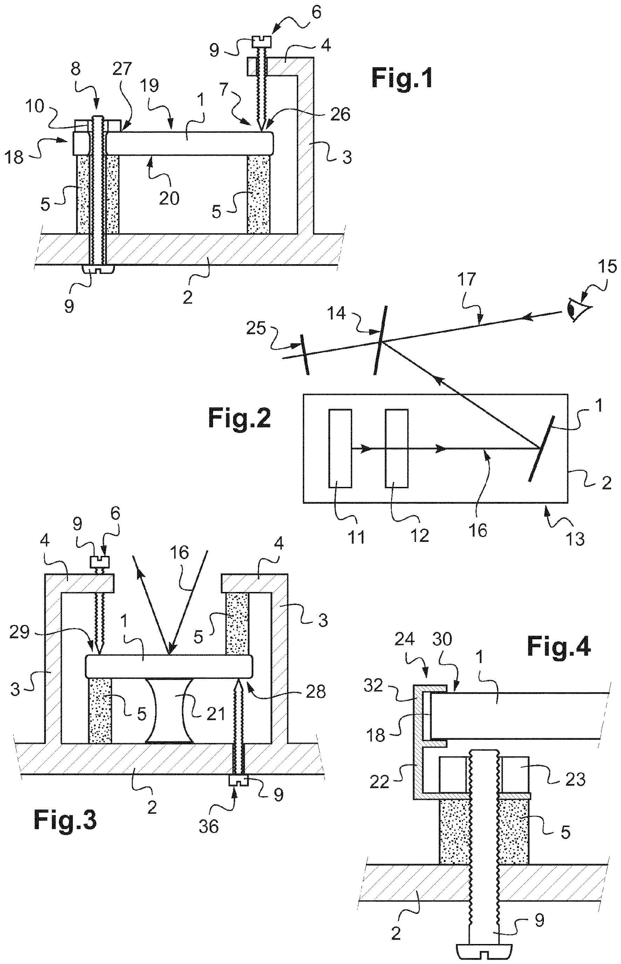

Sur la figure 2, on a représenté un appareil de projection 13 destiné à un afficheur tête-haute de véhicule automobile, qui intègre notamment un dispositif de réflexion optique ajustable conforme à l'invention.

L'appareil de projection 13 comporte de l'amont vers l'aval d'un chemin lumineux d'affichage 16 au moins une source lumineuse 11, un écran imageur 12 et un miroir de repliement 1. L'appareil de projection 13 comporte en outre un châssis rigide 2 destiné à maintenir ensemble ses éléments constitutifs et à les protéger. Ce châssis rigide 2 présente par exemple une forme de boîtier creux dans lequel sont logés tous les éléments constitutifs de l'appareil de projection 13. Ce châssis rigide 2 peut être monobloc ou être constitué d'éléments rigides assemblés rigidement entre eux.

Ce châssis rigide 2 présente notamment une possibilité d'ajustement de l'orientation du miroir de repliement 1, lequel est destiné à réfléchir le faisceau lumineux issu de l'écran imageur 12 vers un élément transparent partiellement réfléchissant 14 de l'afficheur tête haute.

Cet élément transparent partiellement réfléchissant 14 peut être un élément rapporté dans l'habitacle du véhicule, communément appelé « combineur », ou, alors, correspondre au parebrise de ce dernier.

La direction du regard 17 du conducteur 15 en position de conduite croise cet élément transparent partiellement réfléchissant 14 qui permet la visualisation par le conducteur 15 des images projetées par l'appareil de projection 13 sous forme d'images virtuelles 25, les images étant créées en amont sur l'écran imageur 12 de l'appareil de projection 13.

Comme visible sur la figure 1, le miroir de repliement 1 qui est maintenu sur le châssis rigide 2 comporte un bord périphérique 18 le délimitant et deux côtés ou faces opposés, un premier côté 20 et un second côté 19. Ses deux faces opposées sont ici planes mais l'une au moins d'entre elles pourrait être incurvée. Le miroir de repliement présente, par exemple, une forme rectangulaire. Il peut être en matière plastique ou en verre.

Ce miroir de repliement 1 est à orientation de réflexion ajustable.

Le dispositif de réflexion optique conforme à l'invention comporte à cet effet un moyen d'ajustement de l'orientation du miroir de repliement 1 par rapport au châssis 2, qui comporte :
- au moins un élément déformable disposé entre le miroir de repliement 1 et le châssis 2, et
- au moins un système de serrage adapté à comprimer ledit élément déformable 5, 21.

Chaque système de serrage agit sur le miroir de repliement par application d'une force sur ledit miroir en une zone d'application particulière et spécifique audit système de serrage. Cette force, qui peut être de poussée ou de traction, s'applique donc sur le miroir en un emplacement localisé.

Chaque élément déformable, qui vient contrer la force appliquée par le système de serrage, peut être appliqué localement ou d'une manière étendue sur le miroir de repliement. Ainsi, l'élément déformable peut être localisé et en relation directe avec la zone d'application, du même côté ou non du miroir. En variante, il peut déborder de cette zone d'application en s'étendant au-delà ou, selon une autre variante, être localisé à distance de la zone d'application. En effet, le miroir de repliement étant rigide, les forces appliquées ponctuellement par les systèmes de serrage sur le miroir peuvent être reprises et contrées en tout point ou zone du miroir par un ou des éléments déformables.

Sur la figure 1, dans chaque zone d'application 26, 27, le miroir de repliement 1 prend appui par son premier côté 20 contre le châssis rigide 2 via un élément déformable 5 qui s'interpose entre ces deux éléments. L'élément déformable 5 est donc pris en sandwich entre le premier côté 20 du miroir de repliement 1 et le châssis 2.

L'élément déformable 5 présente des propriétés élastiques de manière à pouvoir s'écraser élastiquement sur une distance au moins égale à 10% de son épaisseur initiale. Il peut s'agir d'un bloc de caoutchouc ou de mousse synthétique, ou d'un ressort.

En outre, dans chaque zone d'application, un système de serrage 6, 8 ajustable permet de comprimer plus ou moins ledit élément déformable 5. Plus précisément, dans cette zone d'application, un élément d'appui 7, 10 du système de serrage ajustable appui sur le second côté 19 du miroir de repliement 1 afin de pouvoir comprimer plus ou moins l'élément déformable 5 et ainsi ajuster l'orientation du miroir de repliement par rapport au châssis rigide 2.

Sur la figure 1, on a représenté deux exemples de réalisation du système de serrage 6, 8.

Dans le système de serrage 8 situé à gauche de la figure 1, dans la zone d'application 27, l'élément d'appui 10 est un écrou vissé sur l'extrémité libre d'une vis 9, laquelle traverse librement l'épaisseur du miroir de repliement 1, de l'élément déformable 5 et du châssis rigide 2. La vis 9 comporte, à l'opposé de l'écrou, une tête de vissage qui s'appuie sur le châssis rigide 2. La vis 9 est disposée perpendiculairement au miroir de repliement.

Dans cet exemple, le système de serrage travaille en tirage (ou « traction ») du miroir pour comprimer l'élément déformable 5, la vis 9 étant vissée (ou inversement dévissé pour décomprimer l'élément déformable). Dans un tel cas d'action sur la tête de vis 9 côté face externe du châssis 2, l'ajustement de l'orientation de réflexion du miroir de repliement s'effectue par action sur le système de serrage du côté du premier côté 20 du miroir de repliement 1. On peut cependant, inversement, agir sur l'écrou 10 du côté du second côté 19 du miroir de repliement 1 pour comprimer ou décomprimer l'élément déformable 5.

Dans une variante, la vis est vissée sur un taraudage usiné directement dans le miroir de repliement et l'écrou est possiblement supprimé.

Comme on l'a mentionné, dans le cas où la vis est disposée à travers le miroir de repliement dans la zone d'application, la traversée du miroir de repliement par la vis peut, selon le mode d'ajustement choisi, être libre ou vissée. Dans ce dernier cas, le passage à travers le miroir de repliement étant taraudé, l'élément d'appui correspond alors au filetage de la vis qui s'appuie sur le filet du passage à travers le miroir de repliement.

Dans le système de serrage 6 situé à droite de la figure 1, dans la zone d'application 26, l'élément d'appui 7 est l'extrémité libre d'une vis 9 et la vis 9 est vissée au travers d'un alésage taraudé prévu dans un retour 4 situé à l'extrémité d'un montant 3 solidaire du châssis rigide 2. Comme précédemment, la vis 9 comporte une tête de vissage et est disposée perpendiculairement au miroir de repliement. Dans cet exemple, le système de serrage travaille en poussée pour comprimer l'élément déformable 5, la vis étant vissée (ou inversement dévissée pour décomprimer l'élément déformable). Toujours dans ce cas, l'ajustement de l'orientation de réflexion du miroir de repliement s'effectue par action sur le système de serrage du second côté 19 du miroir de repliement 1.

Contrairement aux systèmes de serrage de la figure 1 (ou de la figure 3) où l'élément déformable 5 est comprimé par le miroir de repliement 1 et donc indirectement par le système de serrage, sur la figure 4, l'élément déformable 5 est quant à lui comprimé par un élément d'appui 23 du système de serrage 24. Ce système de serrage 24 comporte également un mors 22 permettant au miroir de suivre les déformations de l'élément déformable 5 puisqu'il forme une patte comprenant, d'un côté, une pince 32 de prise du bord périphérique 18 du miroir de repliement 1 dans la zone d'application 30, et de l'autre, une plaquette située en sandwich entre l'élément déformable 5 et l'élément d'appui 23. Le système de serrage 24 comporte une vis 9 vissée à travers le châssis 2 et un écrou 23 qui forme ledit élément d'appui 23 et qui est fixé par exemple par collage à l'extrémité libre de la vis 9. La vis 9 traverse librement la plaquette précitée. Lorsque la vis 9 est vissée ou dévissée, l'extrémité libre de la vis 9 avec son écrou 23 monte ou descend entraînant le mors et donc le miroir de repliement 1.

L'ajustement du miroir de repliement 1 est donc fait par référence au châssis rigide 2. Ainsi, notamment selon la position du système de serrage par rapport aux deux côtés du miroir de repliement, par exemple dans le cas d'une vis, cette vis sera vissée dans le châssis (cf. système de serrage 8) ou dans un retour 4 d'un montant solidaire du châssis, le montant s'étendant vers l'avant à partir du châssis vers ce retour 4 situé plus en avant du plan porté par le second côté du miroir de repliement (cf. système de serrage 6),

A noter que dans le cas de la mise en oeuvre d'un montant 3 comme celui de l'exemple de zone d'application 26 à droite de la figure 1, on peut intervertir la vis 9 et l'élément déformable 5 : la vis sera alors vissée à travers le châssis et l'élément déformable sera disposé entre le miroir de repliement et le retour 4 du montant 3. Un tel exemple d'interversion du système de serrage 36 est représenté sur la partie droite de la figure 3 où la zone d'application 28 est du côté du châssis 2.

Dans les exemples donnés en relation avec les figures, des montants 3 avec retours 4 ont été mis en oeuvre pour les moyens d'ajustement avec des éléments 9, 5 de part et d'autre du miroir 1. On comprend cependant que toute configuration équivalente du châssis permettant de prendre appui sur ce dernier de chaque côté du miroir 1 permet d'obtenir le même résultat. Par exemple le châssis peut comporter deux parois parallèles solidaires entre elles, notamment le long d'un fond reliant les deux parois, et entre lesquelles est installé le miroir sensiblement parallèlement aux parois. Dans ce cas, une des parois du châssis reçoit l'élément déformable 5, 21 et l'autre paroi reçoit le système de serrage 6.

Plus généralement, on comprend qu'il est possible d'obtenir un serrage ajustable de diverses manières, notamment avec traversée ou non du miroir de repliement, avec disposition du système de serrage du premier ou du second côté du miroir de repliement, avec travail en poussée ou traction sur le miroir pour comprimer l'élément déformable. L'ajustement du miroir de repliement peut donc se faire de l'extérieur du châssis rigide 2 ou par l'intérieur du châssis rigide 2 selon la modalité de réalisation choisie.

En outre, dans d'autres cas, l'élément d'appui peut être une patte étendue entre une vis d'un système de serrage et le miroir de repliement. En particulier dans le cas d'une vis disposée latéralement par rapport au miroir de repliement 1, c'est-à-dire sur le côté de celui-ci, la patte vissée sur une vis peut former un système de serrage. La patte peut s'appliquer d'un seul côté du miroir de repliement ou dans son épaisseur ou des deux côtés dans le cas d'une patte à pince (cf. pince 32 figure 4) ou à serrage du type crocodile.

Etant donné que le miroir de repliement 1 est destiné à réfléchir des images lumineuses projetées, la face de réflexion du miroir de repliement comporte une zone utile de réflexion sur laquelle lesdites images lumineuses sont réfléchies. Il s'agit en générale d'une zone centrale de la face de réflexion. On dispose donc les zones d'application 26, 27, 28, 29, 30 en dehors de la zone utile de réflexion et, en pratique, en certains points le long du bord périphérique du miroir de repliement.

De préférence, on dispose les zones d'application le long du bord périphérique du miroir de repliement de manière à réduire les interactions entre chaque ajustement de système de serrage sur l'orientation de réflexion du miroir de repliement.

Comme cela a été mentionné supra, le miroir de repliement est plan et est de forme adaptée à sa fonction. Il peut notamment être carré ou rectangulaire. Dans le cas d'un miroir de repliement carré ou rectangulaire, il comporte quatre coins et un bord périphérique à quatre arêtes. Dans ce dernier cas, le miroir de repliement peut comporter trois zones d'application, deux des trois zones d'application étant situées à deux coins voisins du miroir de repliement et la troisième à la partie médiane d'un côté opposé. En variante, lorsque le miroir de repliement comporte quatre zones d'application, les quatre zones d'application peuvent être situées aux quatre coins du miroir de repliement, ou aux centres des quatre arêtes du miroir de repliement.

Au minimum, deux zones d'application sont prévues. Ainsi peut-on prévoir de monter le miroir de repliement 1 sur le châssis rigide 2 via un élément déformable qui forme une articulation de type rotule, et de régler l'orientation du miroir de repliement 1 via deux systèmes de serrage distincts. Cette articulation peut être un pied de fixation du miroir de repliement au châssis, ledit pied étant en matière plastique souple ou élastique. Cette articulation est de préférence installée en dehors de la zone utile de réflexion ce qui fait qu'elle peut se trouver sur le bord du miroir de repliement. Elle peut sinon être installée du côté du miroir de repliement ne servant pas à la réflexion, le miroir n'étant pas traversé par les rayons lumineux. Dans ce dernier cas, on envisage comme représenté figure 3, un élément déformable qui est pied souple 21 formant une articulation collée d'une part au centre du côté du miroir de repliement 1 et d'autre part au châssis rigide 2, des systèmes de serrage ajustable étant disposés au bord du miroir de repliement.

On comprend que l'élasticité ou la souplesse de chaque élément déformable 5 et de l'éventuel pied 21 est adaptée à l'amplitude de l'ajustement nécessaire. On comprend également qu'il faut éviter que des vibrations ou chocs sur le véhicule ne provoquent des déplacements intempestifs du miroir de repliement 1. Afin d'éviter de tels déplacements intempestifs, on immobilise le miroir de repliement après ajustement en usine. Cette immobilisation peut être réalisée de diverses manières, par exemple par collage des systèmes de serrage. Ainsi est-il possible de placer de la colle ou du frein-filet sur le filetage de la vis de chaque système de serrage, juste avant l'opération d'ajustement de l'orientation du miroir de repliement.

Comme on l'a vu, l'afficheur tête-haute comporte un appareil de projection 13 comportant au moins une source lumineuse 11, un écran imageur 12 et le dispositif de réflexion. Cet appareil de projection 13 est généralement disposé dans une structure réceptrice de l'habitacle du véhicule, notamment dans un tableau ou planche de bord. L'appareil de projection est installé et fixé dans la structure réceptrice d'une manière relativement précise et prédéfinie. La structure réceptrice est également installée et fixée dans l'habitacle d'une manière relativement précise et sa position par rapport à l'élément transparent partiellement réfléchissant 14 permettant la visualisation des images projetées sous forme d'images virtuelles 25 est donc prédéfinie assez précisément. Il en résulte que si le réglage de la position des images projetées peut se faire par rapport à la position de l'image projetée sur l'élément transparent partiellement réfléchissant ou son équivalent, il est également possible de faire cet ajustement par rapport à la position de l'image réfléchie sur le miroir de repliement.

Le réglage du dispositif de réflexion de l'appareil de projection par ajustement du miroir de repliement peut être réalisé sur un banc de réglage par l'allumage de la source lumineuse 11 et l'affichage d'une image de mire par l'écran imageur. L'image de la mire est alors projetée le long du chemin lumineux 16 en se réfléchissant sur le miroir de repliement 1 du dispositif de réflexion. L'image projetée réfléchie de la mire peut être observée sur ou à travers, selon le cas, un écran de référence du banc par un opérateur de réglage ou une caméra d'un système informatique d'aide au réglage. Cet écran de référence comporte typiquement une représentation de mire positionnée correctement et le but du réglage est de superposer la représentation avec l'image projetée réfléchie. En fonction de la position de l'image projetée réfléchie par rapport à la représentation, l'opérateur ajuste les systèmes de serrage dans les zones d'application pour parvenir à la superposition. Une fois cette superposition obtenue, l'opérateur verrouille les systèmes de serrage, typiquement par collage.

## Revendications

1. Dispositif de réflexion optique pour afficheur tête-haute de véhicule automobile, comportant:
- un miroir de repliement (1) qui présente un premier côté et un second côté opposés (19, 20), un des deux côtés étant une face de réflexion de la lumière, et
- un châssis (2) qui supporte le miroir de repliement (1),
comportant un moyen d'ajustement de l'orientation du miroir de repliement (1) par rapport au châssis (2), qui comporte :
- au moins un élément déformable (5, 21) disposé entre le miroir de repliement (1) et le châssis (2), et
- au moins un système de serrage (6, 8, 24, 36) adapté à comprimer ledit élément déformable (5, 21),
chaque élément déformable (5, 21) et chaque système de serrage (6, 8, 24, 36) s'appliquent sur le miroir de repliement (1) en des zones d'application (26, 27, 28, 29, 30) qui sont situées en dehors d'une zone utile de réflexion du miroir de repliement,
**caractérisé en ce que**
ledit système de serrage (6, 8, 24, 36) comporte une vis (9),
et **en ce qu'**il comporte des moyens de verrouillage de l'ajustement de l'orientation dudit miroir de repliement (1) par rapport au châssis (2).

2. Dispositif de réflexion optique selon la revendication 1, **caractérisé en ce que** ledit élément déformable (5) est pris en sandwich entre le premier côté (20) du miroir de repliement (1) et le châssis (2), et **en ce que** ledit système de serrage (6, 8, 36) comporte un élément d'appui (7, 10) qui s'appuie sur le second côté (19) du miroir de repliement.

3. Dispositif de réflexion optique selon la revendication 1, **caractérisé en ce que** ledit élément déformable (5) est pris en sandwich entre le châssis (2) et un élément d'appui (23) du système de serrage (24), et **en ce que** ledit système de serrage (24) comporte un mors (22) dont une partie est fixée au miroir de repliement (1) et dont l'autre est bloquée entre ledit élément déformable (5) et ledit élément d'appui (23).

4. Dispositif de réflexion optique selon l'une quelconque des revendications précédentes, **caractérisé en ce qu'**il est prévu trois ou quatre systèmes de serrage (6, 8, 24, 36) qui s'appliquent sur le miroir de repliement (1) en des zones d'application (26, 27, 28, 29, 30) distinctes.

5. Dispositif de réflexion optique selon l'une quelconque des revendications précédentes, **caractérisé en ce que** l'élément déformable (5, 21) est un bloc de caoutchouc ou de mousse synthétique, ou un ressort.

6. Afficheur tête-haute pour véhicule automobile, comportant, de l'amont vers l'aval d'un chemin lumineux (16) d'affichage d'images :
- au moins une source lumineuse (11),
- un écran imageur (12), et
- un élément transparent partiellement réfléchissant (14) prévu pour rendre visible à un conducteur (15) du véhicule automobile des images lumineuses projetées par la source lumineuse (11) et l'écran imageur (12), sous forme d'images virtuelles (25),
**caractérisé en ce qu'**il comporte, entre l'écran imageur (12) et l'élément transparent partiellement réfléchissant (14), un dispositif de réflexion optique conforme à l'une quelconque des revendications précédentes.

7. Procédé de réglage d'un dispositif de réflexion optique d'un afficheur tête-haute conforme à la revendication précédente, ledit procédé comportant :
- l'affichage par l'écran imageur (12) d'une image de mire, et
- le réglage de la position de l'image projetée de la mire sur le miroir de repliement (1) ou sur l'élément transparent partiellement réfléchissant (14), en ajustant le serrage de l'un au moins des systèmes de serrage (6, 8, 24, 36).

## Patentansprüche

1. Vorrichtung zur optischen Reflexion für eine Head-up-Anzeige eines Kraftfahrzeugs, umfassend:
- einen Klappspiegel (1), der eine erste Seite und eine gegenüberliegende zweite Seite (19, 20) aufweist, wobei eine der beiden Seiten eine lichtreflektierende Fläche ist, und
- ein Gestell (2), das den Klappspiegel (1) trägt und ein Mittel zum Einstellen der Ausrichtung des Klappspiegels (1) in Bezug auf das Gestell (2) aufweist, das Folgendes umfasst:
- mindestens ein verformbares Element (5, 21), das zwischen dem Klappspiegel (1) und dem Gestell (2) angeordnet ist, und
- mindestens ein Klemmsystem (6, 8, 24, 36), das dazu geeignet ist, das verformbare Element (5, 21) zu komprimieren,
wobei jedes verformbare Element (5, 21) und jedes Klemmsystem (6, 8, 24, 36) in Anwendungsbereichen (26, 27, 28, 29, 30), die sich außerhalb eines nützlichen Reflexionsbereichs des Klappspiegels befinden, am Klappspiegel (1) anliegen,
**dadurch gekennzeichnet, dass** das Klemmsystem (6, 8, 24, 36) eine Schraube (9) aufweist und dass es Mittel zum Verriegeln der Einstellung der Ausrichtung des Klappspiegels (1) in Bezug auf das Gestell (2) aufweist.

2. Vorrichtung zur optischen Reflexion nach Anspruch 1, **dadurch gekennzeichnet, dass** das verformbare Element (5) zwischen der ersten Seite (20) des Klappspiegels (1) und dem Gestell (2) sandwichartig eingeschlossen ist und dass das Klemmsystem (6, 8, 36) ein Stützelement (7, 10) aufweist, das sich auf der zweiten Seite (19) des Klappspiegels abstützt.

3. Vorrichtung zur optischen Reflexion nach Anspruch 1, **dadurch gekennzeichnet, dass** das verformbare Element (5) zwischen dem Gestell (2) und einem Stützelement (23) des Klemmsystems (24) sandwichartig eingeschlossen ist und dass das Klemmsystem (24) eine Backe (22) aufweist, von der ein Teil am Klappspiegel (1) befestigt und der andere zwischen dem verformbaren Element (5) und dem Stützelement (23) eingeklemmt ist.

4. Vorrichtung zur optischen Reflexion nach einem der vorangehenden Ansprüche, **dadurch gekennzeichnet, dass** drei oder vier Klemmsysteme (6, 8, 24, 36) vorgesehen sind, die in getrennten Anwendungsbereichen (26, 27, 28, 29, 30) am Klappspiegel (1) anliegen.

5. Vorrichtung zur optischen Reflexion nach einem der vorangehenden Ansprüche, **dadurch gekennzeichnet, dass** das verformbare Element (5, 21) ein Block aus Gummi oder synthetischem Schaumstoff oder eine Feder ist.

6. Head-up-Anzeige für ein Kraftfahrzeug, umfassend von stromaufwärts nach stromabwärts eines Lichtwegs (16) zur Anzeige von Bildern:
- mindestens eine Lichtquelle (11),
- einen bildgebenden Bildschirm (12) und
- ein teilreflektierendes transparentes Element (14), das dazu vorgesehen ist, Lichtbilder, die durch die Lichtquelle (11) und den bildgebenden Bildschirm (12) projiziert werden, für einen Fahrer (15) des Kraftfahrzeugs in Form von virtuellen Bildern (25) sichtbar zu machen,
**dadurch gekennzeichnet, dass** sie zwischen dem bildgebenden Bildschirm (12) und dem teilreflektierenden transparenten Element (14) eine Vorrichtung zur optischen Reflexion nach einem der vorangehenden Ansprüche aufweist.

7. Verfahren zum Einstellen einer Vorrichtung zur optischen Reflexion einer Head-up-Anzeige nach einem der vorangehenden Ansprüche, wobei das Verfahren Folgendes aufweist:
- das Anzeigen eines Bezugsbilds durch den bildgebenden Bildschirm (12) und
- das Einstellen der Position des projizierten Bezugsbilds auf dem Klappspiegel (1) oder auf dem teilreflektierenden transparenten Element (14) durch Einstellen der Einspannung mindestens eines der Klemmsysteme (6, 8, 24, 36).

## Claims

1. Optical reflection device for a motor vehicle head-up display, comprising:
- a folding mirror (1) which has a first side and a second side that are opposite (19, 20), one of the two sides being a light-reflecting face, and
- a frame (2) which supports the folding mirror (1),
comprising a means for adjusting the orientation of the folding mirror (1) with respect to the frame (2), which comprises:
- at least one deformable element (5, 21) disposed between the folding mirror (1) and the frame (2), and
- at least one tightening system (6, 8, 24, 36) suitable for compressing said deformable element (5, 21),
each deformable element (5, 21) and each tightening system (6, 8, 24, 36) is applied to the folding mirror (1) in zones of application (26, 27, 28, 29, 30) which are situated outside of a useful reflection zone of the folding mirror,
**characterized in that**
said tightening system (6, 8, 24, 36) comprises a screw (9),
and **in that** it comprises means for locking the adjustment of the orientation of said folding mirror (1) with respect to the frame (2).

2. Optical reflection device according to Claim 1, **characterized in that** said deformable element (5) is sandwiched between the first side (20) of the folding mirror (1) and the frame (2), and **in that** said tightening system (6, 8, 36) comprises a bearing element (7, 10) which bears on the second side (19) of the folding mirror.

3. Optical reflection device according to Claim 1, **characterized in that** said deformable element (5) is sandwiched between the frame (2) and a bearing element (23) of the tightening system (24), and **in that** said tightening system (24) comprises a jaw (22), of which one part is fixed to the folding mirror (1) and the other is blocked between said deformable element (5) and said bearing element (23).

4. Optical reflection device according to any one of the preceding claims, **characterized in that** three or four tightening systems (6, 8, 24, 36) are provided which are applied to the folding mirror (1) in distinct zones of application (26, 27, 28, 29, 30).

5. Optical reflection device according to any one of the preceding claims, **characterized in that** the deformable element (5, 21) is a block of rubber or of synthetic foam, or a spring.

6. Head-up display for a motor vehicle, comprising, from upstream to downstream of an image display light path (16):
- at least one light source (11),
- an imager screen (12), and
- a partially reflecting transparent element (14) provided to make visible to a driver (15) of the motor vehicle light images projected by the light source (11) and the imager screen (12), in the form of virtual images (25),
**characterized in that** it comprises, between the imager screen (12) and the partially reflecting transparent element (14), an optical reflection device conforming to any one of the preceding claims.

7. Method for adjusting an optical reflection device of a head-up display conforming to the preceding claim, said method comprising:
- the display, by the imager screen (12), of a pattern image, and
- the adjustment of the position of the projected image of the pattern on the folding mirror (1) or on the partially reflecting transparent element (14), by adjusting the tightening of the at least one of the tightening systems (6, 8, 24, 36).
